# EUROPEAN PATENT SPECIFICATION

(11) **EP 2 872 693 B1**
(45) Date of publication and mention of the grant of the patent: **05.09.2018**
(21) Application number: 13785234.9
(22) Date of filing: 06.05.2013
(51) Int. Cl.: E01C 19/05, E01C 19/10

(54) **INDOOR ASPHALT PLANT FOR PRODUCING A HIGH PERFORMANCE HOT MIX ASPHALT PRODUCT**
INNENASPHALTANLAGE ZUR HERSTELLUNG VON HOCHLEISTUNGSASPHALT
USINE D'ASPHALTE D'INTÉRIEUR POUR LA PRODUCTION D'UN PRODUIT D'ENROBÉ À CHAUD À HAUTE PERFORMANCE

(30) Priority: 04.05.2012 US 201261643010 P; 04.05.2012 US 201261643046 P
(43) Date of publication of application: 20.05.2015
(73) Proprietor: ALM Holding Company, Onalaska WI 54650 (US)
(72) Inventor: ELIOT, Mark, Minnetonka, MN 55305 (US)
(74) Representative: Spencer, Michael David
(86) International application number: PCT/US2013/039687
(87) International publication number: WO 2013/166489

(56) References cited:
- FR-A1- 2 755 450
- US-A- 5 083 870
- US-A- 5 303 999
- US-B1- 6 186 700
- NATIONAL ENVIRONMENTAL TECHNOLOGY APPICATIONS CORPORATION: 'Microwave Process for Asphalt Pavement Recycling' TECHAPPLICATION no. 2, 1992, XP055177022 Retrieved from the Internet: <URL:http://infohouse.p2ric.org/ref/10/0907 9.pdf> [retrieved on 2013-08-16]

## Description

### BACKGROUND OF THE INVENTION

### FIELD OF THE INVENTION

The present invention is in the technical field of asphalt production. More particularly, the present invention relates to an indoor asphalt plant for producing high performance hot mix asphalt product.

### BACKGROUND

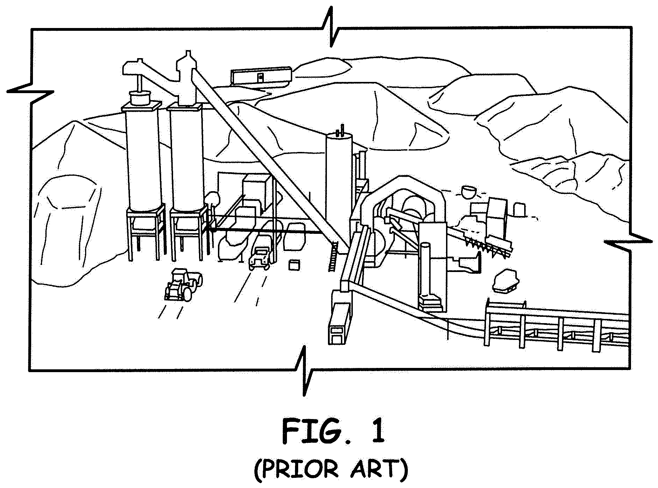

Prior art asphalt production plants have remained virtually unchanged for decades (see Figure 1), Asphalt cement and aggregate are combined in a mixing facility where they are heated, proportioned, and mixed to produce the desired paving mixture. Hot-mix asphalt ("HMA") facilities may be permanently located (also called "stationary" facilities), or it may be portable and moved from job to job. Hot-mix facilities may be classified as either a batch facility or a drum-mix facility; both can be either stationary or portable. Batch-type hot-mixing facilities use different size fractions of hot aggregate which are drawn in proportional amounts from storage bins to make up one batch for mixing. The combination of aggregates is dumped into a mixing chamber called a pug mill. The hot liquid asphalt, which has also been weighed, is then thoroughly mixed with the aggregate in the pug mill. After mixing, the material it is then emptied from the pug mill into trucks, storage silos, or surge bins. The drum-mixing process heats and blends the aggregates with asphalt all at the same time in the drum mixer. Typically €459-€642 ($500-$700) or more of natural fuels are burned for every hour of production. When mixing is complete, the hot-mix is then transported to the paving site and spread with a paving machine in a partially compacted layer to a uniform and even surface layer. While still hot, the paving mixture is further compacted by heavy rolling machines to produce a smooth pavement surface.

Heat used in the production of hot-mix asphalt is one of the main targets in efforts to reduce the energy profile and environmental impact of such facilities. Prior art facilities consume large amounts of energy and produce substantial amounts of pollutants. In recent years the development of WMA or warm mix asphalt was developed as a solution, but this solution suffers from a number of drawbacks. While hot-mix asphalt is produced at 177 to 205 °C (350 to 400 °F), WMA is produced at 149 °C (300 °F), which still requires enormous energy and produces only incrementally less pollutants. While these mixes show slight promise more information is needed to draw definitive conclusions regarding their effectiveness and performance as pavement, but WMA does not fundamentally solve the underlying problems associated with asphalt production.

Another problem with current asphalt production, especially with hot-mix asphalt, is it is produced using very little recycled pavement material ("RAP"). As RAP is harvested from roadways or parking lots only a small amount will be used in new HMA production. Current nationwide standards show new HMA to contain anywhere from 20% to 35% of RAP in the HMA mix design. In most cases higher amounts of RAP causes a decline in new HMA performance. As the years go by RAP piles continue to grow faster than material can be utilized in HMA. In several regions RAP is used as base material for roadways.

Thus, a need exists for an improved asphalt product and method of producing asphalt that does not suffer from the drawbacks and disadvantages of the prior art. In US 6 186 700, multiple hammermills are used for processing shingles with the injection of the material with an emulsion is performed after heating. Other configurations of this process are proposed in US 5 303 999, US 5 083 870 and FR 2 755 450.

### SUMMARY OF THE INVENTION

An object of the present invention is to provide an improved apparatus and method for an asphalt plant for producing a high performance hot mix asphalt product, comprising, RAP material, emulsion added to the RAP, and low energy microwave heating system for processing the RAP emulsion mix. These and other objects of the present invention will become apparent to those skilled in the art upon reference to the following specification, drawings, and claims.

### BRIEF DESCRIPTION OF THE DRAWINGS

Figure 1 is a photograph of a prior art asphalt plant.
Figure 2 is a block flow diagram of LEAP Process.
Figure 3 is a floor plan.
Figure 4 is a floor plan.
Figure 5 is a rendering of a LEAP plant.
Figure 6 is a floor plan.

### DETAILED DESCRIPTION OF THE INVENTION

The present invention comprises a plant for producing a low energy asphalt pavement, which utilizes tested and designed equipment having a low energy heating system using microwave technology and manufacturing process ("LEHS") for using up to 100% recycled asphalt pavement ("RAP") to convert it into high performance hot mix asphalt ("HMA") that out performs prior art asphalt products of any type. LEHS uses very little energy and generates virtually untraceable amounts of pollution when compared to current existing methods of producing HMA.

In general the process comprises the following steps:

| | | |
|---|---|---|
| RAP Material (up to 100%) | Sized & Injected (about 5%) | Fused to produce a High |
| from roadways or parking lots | Engineered Emulsion | Performance HMA |

The process starts with RAP material recovered from roadways, parking lots or other paved surfaces. The process can use varying amounts of RAP including up to 100% RAP, which allows for maximum reuse or recycling of product. An emulsion is added to the product, as describe in more detail below, the emulsion can constitute about 5% of the product (or variations therefrom). After processing as described below, a fused high performance HMA product is produced.

The RAP raw used for production, and tested as described below, came from several different climatic zones of the United States and represented the multiple variations of pavement that are present in the field. The injection process can use conventionally available engineered asphalt emulsions at a rate of 4% to 8%. The finished material has strength characteristic twice that of the best HMA currently in production, and at least as much flexibility to resist cracking as with prior art HMA.

The production process utilizes a much smaller footprint than existing pavement HMA manufacturing plants. The production process utilizes substantially less energy, reduces the processing temperatures, and produces substantially less pollution, and unlike prior art asphalt production facilities these advantages allow the production facility to be placed inside an enclosed building opening up better strategic plant placement reducing trucking making the process and product more economical. The facility, without the prior art environmental and other problems, can be located closer to the points of use of the product, which tend to be in densely populated areas that previously would not be suitable locations for an asphalt plant. Also, an enclosed plant can operate in cold and inclement weather, which is not possible or practical for outdoor facilities. In colder climates, the energy demands needed to heat the product and the use of open flames made it impossible to operate indoors and extremely expensive to operate in cold weather; so much so that asphalt plants in colder climates close during the winter. The present invention substantially eliminates these and other problems.

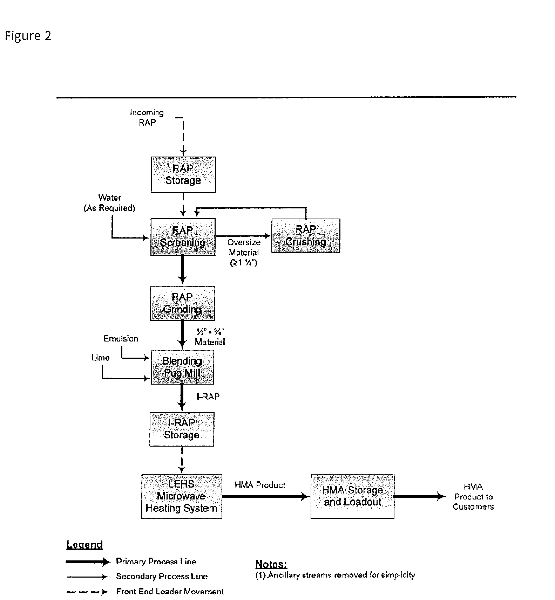

Figure 2 describes the general flow of the process of producing HMA in accord with the present invention. The steps thereof are described herein below. The low energy asphalt production ("LEAP") process of the present invention process involves RAP receiving, RAP sizing and engineered emulsion injection, ambient temperature I-RAP (RAP injected with emulsion) storage, processing through the low energy microwave heating system ("LEHS"), and storage and shipping of the final HMA product.

The LEAP standard HMA mix design is based on weight, and is to utilize about between 4 to 8 percent emulsion, about between 96 to 92 percent RAP, and optional addition about 1 percent lime, corresponding to an 85 tons per hour ("TPH") RAP feed rate, 4.5 TPH of emulsion, and 0.9 TPH of lime. Incoming RAP can be stored inside or outside the facility. Storing inside prior to processing will reduce moisture content on the feedstock from approximately 4 to 7 percent moisture at the time of delivery to minimum quantities at the time of use. Excess water, if any, is driven off within the microwave heating section and does not impact the final product quality.

### RAP Receiving

LEAP receives RAP via end dump trucks through a truck sized garage door opening in the side of the processing building; the incoming material is moved with a front end loader, conveyor or similar device. RAP is piled in a corner of the building forming multiple connected piles designed preferably for combined storage of approximately 20,000 tons of material. Incoming RAP is to be graded by source. LEAP intends to utilize RAP from highways or other public projects to the extent practical to limit the amount of incoming aggregate that is outside typical HMA DOT specifications. Should it become necessary to utilize RAP from multiple sources, LEAP intends to form multiple piles to facilitate multiple mix designs.

### RAP Grinding and Emulsion Blending

RAP is to be ground using nominal 250TPH throughout grinding and blending unit, which are commercially available from Nesbitt Contracting or Caterpillar Corporation, which is designed to size RAP to between 3.18 and 3.81 cm (one and a-quarter inch and one-half inch) size depending on final mix design. The crushing/injection unit includes a screen on the incoming RAP that allows material of 2.54 and 3.81 cm (one and one half inch) or less in size to enter the grinding section. Oversized material that will not pass through the incoming screen is sent to a crushing section to be reduced in size and then returned to the incoming screen. Water is added to the RAP prior to grinding to control dust and minimize heat generation within the grinding machine. Output from the grinding section is sent to two parallel pug mills, which have the ability to blend or inject up to two different grades of the liquid engineered emulsion with the ground RAP. Solid and liquid material is blended within a pug

mill using the opposing paddles on two parallel shafts; the paddles simultaneously mix the material and push the mixture from the inlet to the outlet of the mill. The RAP-emulsion blend, known as intermediate or injected RAP ("I-RAP"), is to be conveyed from the outlet and piled on either side of the crushing/injection unit, production is sized such that the I-RAP material can be produced at approximately 3 times the rate of the heating process (described below). I-RAP can be stored at ambient temperature for up to 8 weeks prior to processing into HMA.

### Low Energy Heating System (LEHS)

LEAP utilizes a microwave heating system (shown below) to heat the I-RAP to a pre-specified temperature prior to delivery for silo storage and/or to paving contractors. This system, known by LEAP as the Low Energy Heating System ("LEHS"), uses microwave energy of about 915 MHz to selectively heat the aggregate within the I-RAP, enabling LEAP to heat the mixture without degrading the asphalt cement within the emulsion. LEAP uses two parallel heating systems with a minimum of about 300kW to 800kW, each with 45 to 75 TPH of capacity, to process the I-RAP. Each LEHS system includes a minimum of four microwave transmitter units with a splitter/wave guide that directs microwave energy from each transmitter into two rotary head heating chambers, resulting in a combined eight chambers per system (16 heating chambers per facility). I-RAP is passed through the microwave heating chambers using a belt conveyor at an I-RAP depth of slightly greater than 7.62 cm (3 inches).

The engineered emulsions designed for use with the LEHS are preferably capable of insulating and protecting the remaining asphalt binder present in the RAP from the violent heating power of the microwaves. In particular, aged RAP normally has 2.4 to 4% asphaltene binder, asphaltines are present in asphalt and the ratio of desirable maltenes to asphaltenes decreases over time due to weathering and oxidation causing the asphalt to become dry or brittle. High concentration of asphaltene has heretofore limited the usefulness of RAP such that it either cannot be used, can only be used in limited quantities resulting on an inferior dry brittle product, or the asphaltines can be burned off at temperature producing pollutants. LEAP can utilize up to 100% RAP because it can rejuvenate asphaltenes, or otherwise increase the ration of maltenes to asphaltenes resulting in a very high quality HMA product. The microwave transmitters have the ability to generate variable or constant power and the degree of heating is to be controlled by LEAP by adjusting the power and conveyor belt speed to increase or reduce the exposure time of the I-RAP within the LEHS. By varying the intensity of the power within the chamber or series of chambers different HMA mix designs can be produced with different performance characteristics.

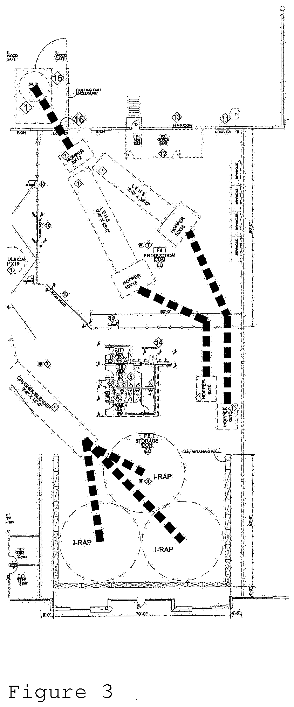

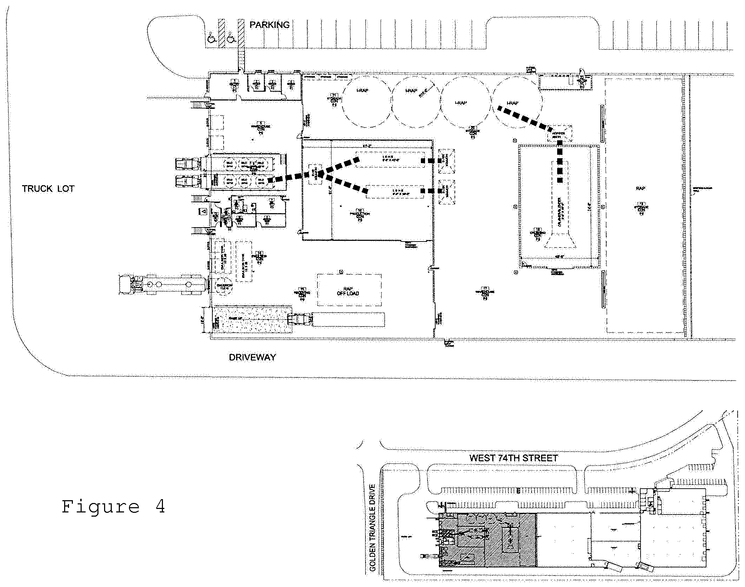

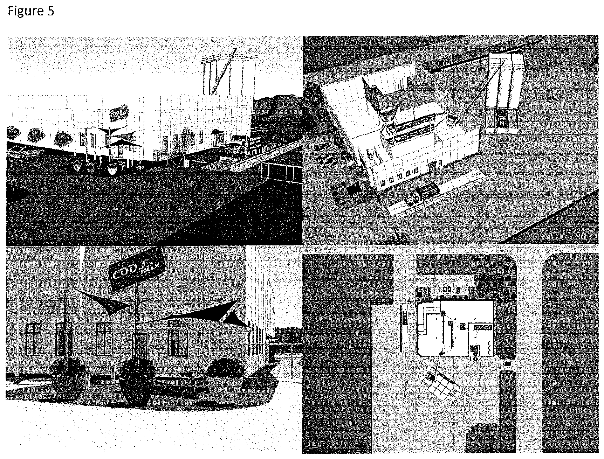

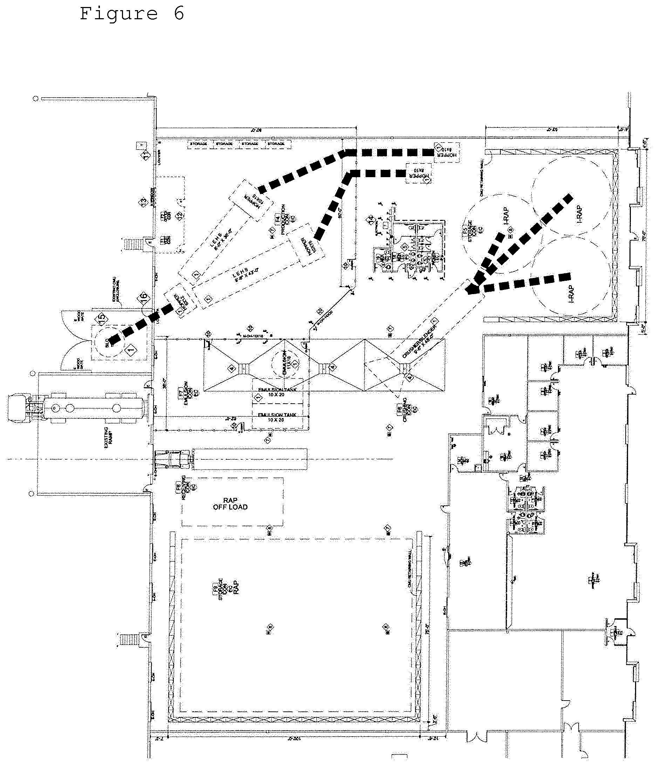

Various exemplary layouts for the Low Energy Asphalt System (LEAS)/LEAP plant are shown in Figures 3-6, and can accommodate up to two LEHS systems can be located in close proximity within a plant.

### LEAP HMA Performance Characteristics

LEAP HMA for has been tested in comparison to Superior Performing Asphalt Pavements ("Superpave") standard developed for the U.S. Department of Transposition, Federal Highway Commission and used for all paving projects that are funded in a whole or in part by federal funds. The principal measurement used for the evaluation of HMA is the tensile strength ratio ("TSR") which is used to predict the durability of the HMA. Some southern states, notably Texas and Louisiana, have replaced the TSR measurement with the Hamburg Rut Test measurement as HMA laid at elevated temperatures can become brittle. The following table shows the results of testing performed on LEAP HMA against the foregoing standards.

**LEAP HMA Property Testing Results per AET, January 12, 2013⁽¹⁾ (HMA Samples from December 20, 2012 and January 9, 2013**

| **Property** | **Superpave HMA SPWEB340B⁽²⁾** | **LEAP at 110°C(230°F) No Lime** | **LEAP at 105°C (220°F) With Lime** | **LEAP at 143°C (290°F) With Lime** |
|---|---|---|---|---|
| **Asphalt Cement or Emulsion Content - % by weight** | **5.5** | **5.0** | **5.0** | **5.0** |
| **TSR** | **80.9** | **73.8** | **75.5** | **83.4** |
| **Percent Air Voids** | **4.0** | **3.0** | **2.8** | **3.8** |
| **Hamburg Rut Test -12.5 milimeter depths** | **8.500** | **N/a** | **19.200** | **20,000+⁽³⁾** |
| **Bulk Specific Gravity** | **2.438** | **2.356** | **2.358** | **2.356** |
| **Density, kg/m3 (4) (lb/ft3 (4))** | **2437 (152.1)** | **2357 (147.0)** | **2356 (147.1)** | **2357 (147.0)** |
| **Maximum Specific Gravity** | **2.540** | **2.396** | **2.422** | **2.396** |
| **Dry Tensile Strength, kg/m2 (5) (psi(5))** | **47884 (68.1)** | **90420 (128.6)** | **139994 (199.1)** | **159118 (226.3)** |
| **Soaked Tensile Strength, kg/m2 (psi(5))** | **38754 (55.1)** | **66656 (94.9)** | **105673 (150.3)** | **132739 (188.8)** |

| | | | | |
|---|---|---|---|---|
| **(1) Engeneering Testing Summary. Crus Corporation Asphalt Plant As Emissions EngeneeringTest, December 18. 2012. AET Prospect Number 14.01235** **(2) SPWEB3408 a Mennesota Department of Transportation Superpave specification where 'SP' indicates the gyratory (testing) design. 'WE' indicates a wear mixture. 'B' indicates <3/4 aggregate. '3' indicates the trafic level, '40' indicates 4 0 percent design , and the 'B' indicates the** **(3) Test halled at 20.000 cycles, the upper load of the testable range** **(4) kg/m3 = kilogram per cubic meter (Lb./ft3 = pounds per cubic foot)** **(5) kg/m2 = kilogram per square meter (Psi = pounds per square inch.)** | | | | |

The Superpave specification, and most derivative state specifications, do not permit the use of more than 25 to 50 percent RAP within the HMA mix design due to the inability of traditional batch and drum HMA plants to sufficiently heat the aggregate within the RAP to temperatures necessary to meet the minimum TSR specifications without forming excess smoke emissions and particulate matter which violates standard air permits. The HMA produced using LEAP production process meets or exceeds the min TSR specification for most states while using 100% RAP and produces virtually zero emissions or particulate matter.

**Minimum TSR for Select State DOT Specifications**

| TSR (Minimum) | States |
|---|---|
| 85% | MS (with 1% lime) |
| 80% | VA, OR, FL, AL, NM, OK, SD, IA, NY, GA, AR, MN |
| 70% | CA, NV, MO, CO |
| 60% | AZ |
| Hamburg Rut Test | TX, LA, UT |

Several of the southern states have moved to the Hamburg Rut Test for a more robust measurement of durability of the HMA. Virgin asphalt cement had two primary chemical components, asphaltenes and maltenes. Asphaltenes are hard materials that provide the mechanical strength while maltenes are the oily fraction which functions as the sticky component in HMA. Maltenes oxidize with age or excess heat to form asphaltenes which causes the HMA to become hard and brittle. The aged or heat damaged HMA cracks under heavy loads causing failures of the road surface. The Hamburg Rut Test is performed using a wheel which passed over an HMA sample until the ensuing rut exceeds 12.5 millimeters in depth. Southern states, where summer paving temperatures can prematurely age the HMA, have been transitioning to the Hamburg Rut Test as a proxy measurement to ensure that the maltene fraction was not damaged during application. This test is an important benchmark for LEAP HMA as the asphalt cement within RAP has been aged, and traditional HMA using RAP is excess of 25 percent had a proclivity to fail early due to the relative lack of maltenes.

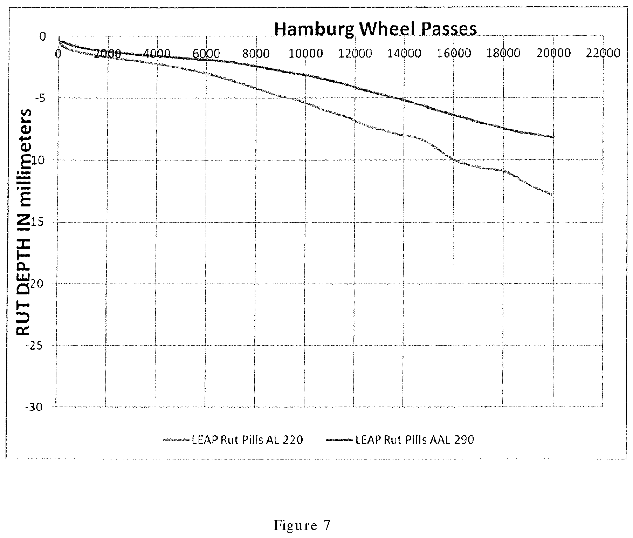

The graph in Figure 7 shows the results for testing of two variations of the LEAP HMA.

LEAP Rut Test results far surpass Rut Test results for the best performing HMA products, especially when you consider the RAP used was never designed for loading anywhere near this level (tensile<60).

The brighter line represents material that was heated to 105 °C (220 °F); the darker line was heated to 143 °C (290 °F). Conventional Superpave HMA fails at 8500 passes, while the LEAP HMA exceeded 20,000 cycles in some cases without failure.

### LEAP Emissions

Emission testing shown below was performed for particulate and volatile organic carbon ("VOC") testing of the exhaust from an indoor LEHS system inside. The summary of which is included below.

Overview:
Particulate and VOC air emission testing was conducted on a pilot scale asphalt plant on December 18, 2012. Particulate emission testing was conducted according to EPA Method 5 and EPA Method 202. VOC emission testing was conducted in adherence with EPA Method 25A using a Total Hydrocarbon (THC) Analyzer. At the time of the emission test, the pilot scale asphalt plant was producing 10 Tons/Hour of asphalt.
A federal regulation (NSPS Subpart I) exists for particulate matter for all Hot Mix Asphalt Plants (HMA). Currently, there is not a federal regulatory limit for VOC; VOC emissions are compared to the EPA emission factors in the table below. Detailed test results can be found in Table 1 and Table 2 which are attached to this document.

| **Emission Unit Tested** | **Pollutant** | **Federal Standard** | **Test Result** |
|---|---|---|---|
| Cirus Pilot Scale Asphalt Plant as Tested | Particulate Matter | ≤ 0.04 Grains/DSCF | 0.0006 Grains/DSCF |
| Cirus Asphalt Plant (Scaled up 8 times) | Particulate Matter | ≤ 0.04 Grains/DSCF | 0.005 Grains/DSCF |

| **Emission Unit Tested** | **Pollutant** | **EPA Emission Factor** | **Test Result** |
|---|---|---|---|
| Cirus Pilot Scale Asphalt Plant as Tested | VOC | 0.440 Lbs/Hr ^{a,b} | 0.026 Lbs/Hr^{a} |

| | | | |
|---|---|---|---|
| a) VOC is equivalent to the Total Hydrocarbons its Propane. b) This number represents the EPA emission factor for VOC emissions for a Drum Mix HMA running on natural gas. | | | |

**Table 1**

| **Summary of Asphalt Plant Particulate Test Results Crius Corporation** - **Plymouth, Minnesota AET 14-01235** | | | | |
|---|---|---|---|---|
| **Parameter** | **Run #1** | **Run #2** | **Run #3** | **Average** |
| **Particulate Matter (PM) Results** | | | | |
| **Date** | 121812 | 121812 | 121812 | |
| **Run Time** | 9.28-10.28 | 11.43-12.42 | 13.28-14 28 | |
| **Stock Temperature. °C (°F)** | 19.4 (62) | 21.7 (71) | 21.1 (70) | 20 (68) |
| **Stock Oxygene. %** | 20.7 | 20.7 | 20.7 | 20.7 |
| **Stock Carbon Dioxide. %** | 0.2 | 0.2 | 0.2 | 0.2 |
| . % | 2.3 | 3.0 | 2.1 | 2.5 |
| **Stock Flow Rate. DSCFM** | 700 | 700 | 700 | 700 |
| | 101.4 | 100.1 | 99.2 | 100.2 |
| **Filterable Particulate Emission Results** | (0.0059) | (0.0025) | (0.0028) | (0.0037) |
| **Particulare Concentration. grams** | 0.0010 | 0.0004 | 0.005 | 0.0006 |
| **Particulare Mass Rate. kg hr (Lba Hr)** | 0.0027 | 0.0011 | 0.0013 | 0.0017 |
| **Organic Condensibles Emission Results** | (0.0011) | (0.0016) | (0.0013) | (0.0013) |
| **Particulate Concentration grams** | 0.0002 | 0.0003 | 0.0002 | 0.0002 |
| **Particulate Mass Rate kg hr (Lba Hr)** | 0.0005 | 0.0007 | 0.0006 | 0.0006 |
| **Inorganic Condensibles Emission Results** | (0.0050) | (0.0046) | (0.0042) | (0.0046) |
| **Particulate Concentration grams** | 0.0008 | 0.0008 | 0.0007 | 0.0008 |
| **Particulate Mass Rate kghr (Lba Hr)** | 0.0023 | 0.0021 | 0.0019 | 0.0021 |
| **Filterable - Organic Condensibles Emission Results** | (0.0070) | (0.0041) | (0.0040) | (0.0050) |
| **Particulate Concentration grams** | 0.0012 | 0.0007 | 0.0007 | 0.0008 |
| **Particulate Mass Rate. kg hr Lba Hr)** | 0.0032 | 0.0019 | 0.0018 | 0.0023 |
| **Total Particulate Emission Results** | (0.0119) | (0.0086) | (0.0082) | (0.0096) |
| **Particulate Concentration grams** | 0.0020 | 0.0014 | 0.0014 | 0.0016 |
| Particulate Mass Rate kg hr (Lb Hr) | 0.0054 | 0.0039 | 0.0037 | 0.0044 |

**Table 2**

| **Summary of Asphalt Plant VOC Emission Test Results Crius Corporation - Plymouth, Minnesota** | | | | | | |
|---|---|---|---|---|---|---|
| Run #1 | | | | | | (Lbs/hr) |
| | | | | | | kg/hr |
| | | | | | | 0.0104 |
| | | | | 0.0127kg/ hr | | (0.023) |
| **Run #2** | | | | | | (Lb/hr) |
| | | | | | | kg/hr |
| | | | | | | 0.0086 |
| | | | | 0.0109kg/hr | | (0.019) |
| | | | | | | (Lbs/hr) |
| | | | | | | |
| | | | | | | 0.0095 |
| | | | | 00118kg/ hr | | (0.021) |

The pollution testing results indicate the LEAP plant will fall well below the required emission standards for HMA production. These results demonstrate that the LEAP plants are suitable for locations that are outside the reach of conventional HMA plants in most states due to pollution and air quality regulations.

LEAP Technologies plants can be placed in almost any industrial zoning that supports trucking traffic. This significantly increases the competitive advantage over conventional asphalt plants by going where they cannot. Heretofore HMA plants, due to pollution and emission issues, had to be located remotely, and typically not near locations where the HMA product is used. This greatly increased cost associated with product use because the product has to be transported greater distances than in possible with LEAP plants.

Furthermore, because LEAP plants can be located indoors and have much reduced energy needs they can be operated year round in colder climates and at much lower operating costs. Strategic locations will reduce hauling rates and improve the economic impact to the end users.

Still further, LEAP plants have a much smaller footprint than conventional asphalt plants, providing even greater advantages.

LEAP plants can be operated at the same time or operated based on product demand. Unlike existing conventional HMA plants there is little effort to engage production, simply turn on a few switches and your production ready. The ease of production engagement allows ability to have material readily available 12 months a year, even in northern climates. Existing HMA plants in the northern regions are required to shut down during the winter months due to the high operational costs and required placement outdoors.

In the southern states or warmer climates the configurations shown below allows for the RAP to be stored outside. LEAP plants can be located within a city in a facility of 131,234 m² (40,000 sq. ft.) or larger. By bringing the entire production process inside you retain the ability to produce anytime without the high cold weather start-up costs associated with conventional HMA plants.

While the foregoing written description of the invention enables one of ordinary skill to make and use what is considered presently to be the best mode thereof, those of ordinary skill will understand and appreciate the existence of variations, combinations, and equivalents of the specific embodiment, method, and examples herein. The invention should therefore not be limited by the above described embodiment, method, and examples, but by all embodiments and methods within the scope of the claim. For example, the LEAS system could be used to modify existing asphalt plants to allow them to either reduce the level of pollution, by reducing the heat
necessary, and/or to increase the amount of RAP used in the creation of HMA to perhaps as high as about 70% to 80%.

## Claims

1. An indoor asphalt plant for producing a high performance hot mix asphalt product, comprising:
a recycled pavement material RAP storage area;
a RAP processing area for sizing, crushing oversized RAP, and screening the RAP; an injector for injecting an asphalt emulsion into the sized and screened RAP to produce RAP injected with emulsion IRAP; a pug mill for mixing the asphalt emulsion and the RAP; an IRAP storage area; two microwave parallel heating systems for heating the IRAP between 105°C and 143°C (220°F and 290°F), each system operating at a power level between 300kW and 800kW and at a wave length of 915 MHZ, and each system comprising 4 microwave transmitter units with a wave guide, so as to convert the IRAP into a hot mix asphalt product; a conveyor for conveying the IRAP through the microwave heating systems, wherein the IRAP is at a depth slightly greater than 7.62 cm (3 inches) on the conveyor;
a storage area for storing the hot mix asphalt product, wherein the hot mix asphalt product comprises about between 92 and 96 percent of RAP and about between 4 and 8 percent of asphalt emulsion; and wherein the entire plant is indoors.

## Patentansprüche

1. Hallen-Asphaltanlage zum Herstellen eines heißgemischten Hochleistungsasphaltprodukts, die Folgendes umfasst:
einen Bereich zum Lagern von recyceltem Straßenbahnbelagmaterial (RAP- Lagerbereich);
einen RAP-Verarbeitungsbereich zum Klassieren, zum Zerkleinern von übergroßem RAP und zum Sieben des RAP;
eine Einspritzeinrichtung zum Einspritzen einer Asphaltemulsion in das klassierte und gesiebte RAP, um ein RAP mit eingespritzter Emulsion, IRAP, zu erzeugen;
eine Knetmühle zum Mischen der Asphaltemulsion und des RAP;
einen IRAP-Lagerbereich;
zwei parallele Mikrowellenheizsysteme zum Erhitzen des IRAP auf einen Wert im Bereich von 105 °C bis 143 °C (220 °F bis 290 °F), wobei jedes System mit einem Leistungspegel im Bereich von 300 kW bis 800 kW und bei einer Wellenlänge von 915 MHz arbeitet, wobei jedes System 4 Mikrowellensendeeinheiten mit einem Wellenleiter enthält, um das IRAP in ein heißgemischtes Asphaltprodukt umzuwandeln;
eine Fördereinrichtung zum Befördern des IRAP durch die Mikrowellenheizsysteme, wobei sich das IRAP mit einer Tiefe, die etwas größer als 7,62 cm (3 Zoll) ist, auf der Fördereinrichtung befindet;
einen Lagerbereich zum Lagern des heißgemischten Asphaltprodukts,
wobei das heißgemischte Asphaltprodukt das RAP im Bereich von etwa 92 bis 96 Prozent enthält und eine Asphaltemulsion im Bereich von 4 bis 8 Prozent enthält; und
wobei sich die gesamte Anlage in einer Halle befindet.

## Revendications

1. Usine de bitume en intérieur pour produire un produit de bitume haute performance mélangé à chaud, comprenant:
une zone de stockage de matériau de revêtement recyclé RAP;
une zone de traitement de RAP pour calibrer, broyer le RAP surcalibré, et sélectionner le RAP;
un injecteur pour injecter une émulsion de bitume dans le RAP calibré et sélectionné pour produire le RAP injecté avec une émulsion IRAP;
un broyeur pour mélanger l'émulsion de bitume et le RAP ;
une zone de stockage d'IRAP;
deux systèmes de chauffage micro-ondes en parallèle pour chauffer l'IRAP entre 105°C et 143°C (220°F et 290°C), chaque système fonctionnant à un niveau de puissance entre 300 kW à 800 kW et à une longueur d'onde de 915 MHz, et chaque système comprenant quatre unités émettrices de micro-ondes avec un guide d'onde, de façon à convertir l'IRAP en produit de bitume mélangé à chaud;
un convoyeur pour convoyer l'IRAP à travers le système de chauffage par micro-ondes, dans lequel l'IRAP est à une profondeur d'un peu plus de 7, 62 cm (3 pouces) sur le convoyeur ;
une zone de stockage pour stocker le produit de bitume mélangé à chaud, dans laquelle le produit de bitume mélangé à chaud comprend environ de 96 à 92 pourcent
de
RAP, et environ de 4 à 8 pourcent d'émulsion de bitume, et
dans laquelle l'ensemble de l'usine est en intérieur.
